# EUROPEAN PATENT SPECIFICATION

(11) **EP 0 813 708 B1**
(45) Date of publication and mention of the grant of the patent: **09.12.1998**
(21) Application number: 96904261.3
(22) Date of filing: 29.02.1996
(51) Int. Cl.: G06F 3/06

(54) **ELECTRONIC COMPUTER WITH A MAGNETIC PERIPHERAL UNIT**
ELEKTRONISCHER RECHNER MIT EINER MAGNETISCHEN PERIPHERIEEINHEIT
ORDINATEUR ELECTRONIQUE A UNITE PERIPHERIQUE MAGNETIQUE

(30) Priority: 03.03.1995 IT TO950163
(43) Date of publication of application: 29.12.1997
(73) Proprietor: Ing. C. Olivetti & C., S.p.A., 10015 Ivrea (IT)
(72) Inventor: SARTORI, Gabriele, I-13060 Lessona (IT)
(74) Representative: Casuccio, Carlo
(86) International application number: IT9600039
(87) International publication number: WO9627829

(56) References cited:
- US-A- 5 313 589
- COMPUTER DESIGN, vol. 27, no. 17, 15 September 1988, pages 44-46, 48, 50 - 52, 54, XP000036423 LIEBERMAN D: "IN SEARCH OF THE HIGH-PERFORMANCE CONTROLLER"

## Description

### TECHNICAL FIELD

This invention concerns an electronic computer comprising a central processing unit, a read only memory, direct memory access means, a random access system memory and a hard disk unit having a rotating magnetic disk, at least one write and/or read head to be positioned on the magnetic disk for writing and/or reading analog signals to/from the magnetic disk, activating means for rotating the magnetic disk and positioning the head with respect to the magnetic disk, analog-digital conversion means for converting the analog signals into digital information, and a sequential access memory connected to the analog-digital conversion means.

### BACKGROUND ART

It is known from the article by Lieberman D. "In search of the high-performance controller" (COMPUTER DESIGN vol.27, no. 17, 15 September 1988) magnetic peripheral units, for example hard disk units (HDU), connectable to electronic computers, particularly personal computers of both the desk-top and portable types.
Such HDU, are standard modules having, in addition to the analog circuitry for controlling relative position between magnetic medium and read and write heads, a microprocessor, a direct memory access circuit (DMA), an intermediate fast access memory and logic interfacing circuitry for error correction and control of the data transfer between the intermediate fast access memory and the system memory (RAM). Accordingly, in these modules, it is the microprocessor and the DMA mounted on the peripheral unit that control and manage reading/writing of data, storage in the intermediate fast access memory of the data read and/or to be written, and transfer of the data from or to the RAM. Moreover in known type HDU, the intermediate fast access memory is constituted by a large First In First Out memory (large FIFO) or by a large cache associated with a small FIFO.

Use of the large FIFO, generally with a capacity of 256 Kbytes, and of a peripheral microprocessor and DMA, which manage the flow of data between the peripheral and the motherboard, means that state-of-the-art magnetic peripherals in general, and hard disk units in particular, are rather expensive.

Additionally, in known peripheral units the transfer of data between the peripheral unit and the RAM takes place using standard interfaces, typical examples being "ATA", through a known type local channel, "IDE" and "EIDE". The data transfer rate at the moment is about 16 megabytes/second, which is considerably lower than the rate of data transfer between the components of the motherboard, which is 133 megabytes/second. Thus the transfer of data to and from the peripheral unit constitutes a considerable limitation on speed of the work operations performed by the electronic computer, especially in cases where the central processing units (CPU) are very fast, as in the case of the 486 or Pentium class CPUs produced by the Intel Corporation.

### SUMMARY OF THE INVENTION

The technical problem that this invention proposes solving is that of providing an electronic computer in which the data are transferred to and from the peripheral unit at the same rate and with the same throughput as those of the data transfers between the various components inside the computer, and which at the same time is very reliable and inexpensive.

This technical problem is solved by the electronic computer according to this invention, characterized in that the random access system memory is connected to the sequential access memory for storing the digital information converted from the analog-digital conversion means, the read only memory stores all the programs for controlling the activating means and the transfer of the digital information between the analog-digital conversion means and the random access system memory and the direct memory access means transfers the digital information between the analog-digital conversion means and the random access system memory under the control of the central processing unit.

### BRIEF DESCRIPTION OF DRAWINGS

A better understanding of this and other characteristics of the present invention can be had when the following description of a preferred embodiment, provided by way of a non-exhaustive example, is considered in conjunction with the accompanying drawings, in which:

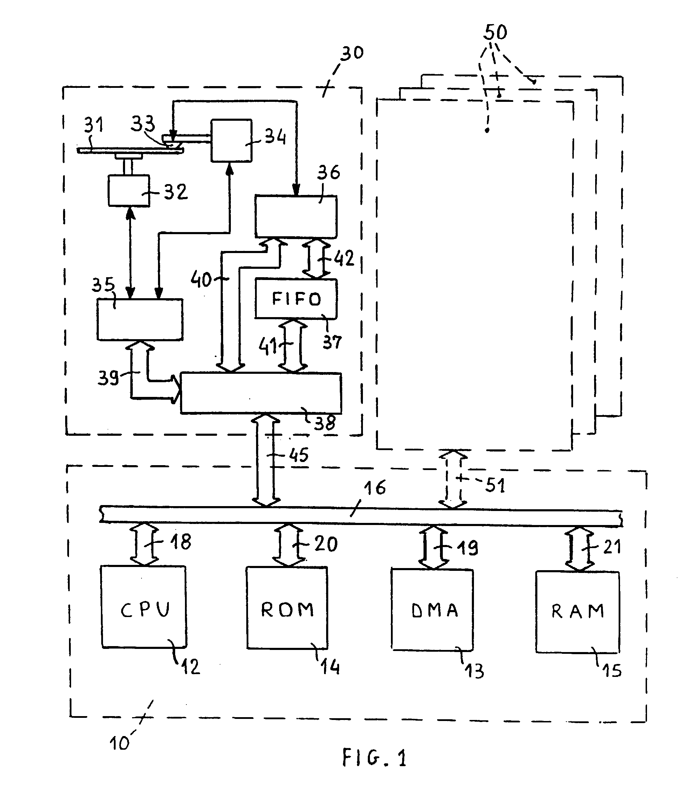

FIG. 1 is a block diagram of the electronic computer according to the present invention.

### PREFERRED MODE FOR CARRYING OUT THE INVENTION

With reference to FIG. 1, the electronic computer of the present invention comprises a processing unit 10, constituted for example by the motherboard of a personal computer, to which a magnetic type peripheral unit 30, for example a hard disk unit, is connected.
The processing unit 10 comprises a central processing unit (CPU) 12, for example a class 486 or Pentium microprocessor of the INTEL Inc. company, a known type of random access memory (RAM) 15, suitable for storing data, a logic circuit for management and control of the direct data transfer (DMA) 13, and a read only memory (ROM) 14, suitable for storing the firmware programs, which are developed in the processing unit 10 design stages.
The CPU 12, the ROM 14, the DMA 13 and the RAM 15 are connected in a known way to a system channel for the transfer of data and commands 16 through local data and command channels, 18, 20, 19 and 21 respectively.
The system channel 16 and the local channels 18, 19, 20 and 21 are of a known type and are suitable for transferring data and commands between the internal elements of the unit 10 at a rate of at least 133 megabytes per second.
The peripheral unit 30 includes a hard type magnetic disk 31 connected to an electric motor 32, suitable for setting it in rotation. A magnetic head 33, suitable for reading andlor writing data on the magnetic disk 31, is driven in a known way by a second electric motor 34, and thereby positioned on the different concentric tracks of the disk 31. The motors 32 and 34 are commanded by a control unit 35, also of a known type.
The head 33 is connected to a known type of logic circuit for amplification and coding 36 which, during the read operations on the magnetic disk 31, is suitable for amplifying the analog signals read, for converting them into digital form and correcting instantaneously any read errors, is also suitable for converting the digital type data to analog form and for instantaneously verifying that the data thus converted are written correctly on the magnetic disk 31.
Connected to the circuit 36 through a command channel 40 is a logic interface circuit 38 and, through a data channel 42, a sequential access, read and write memory (FIFO), which is connected in turn to the circuit 38 through a data channel 41.
The sequential memory 37, of low capacity, for example of around 1 Kbyte, is suitable for storing in sequence the data to be exchanged between the circuit 36 and the interfacing circuit 38. The latter-named is in turn suitable for exchanging data and commands with the processing unit 10, through a local channel 45, connected to system channel 16.
The local channel 45 is of a type commonly known as PCI (Peripheral Component Interconnect) and is suitable for transferring data at a rate of 133 megabytes/second.
To obtain a user-selected configuration, other peripheral units 50, of a known type or similar to the peripheral unit 30, may also be connected to the processing unit 10 through other data and command channels 51, to be connected to the system channel 16.

The electronic computer described up to this point operates in the following way.
When the CPU 12, on the basis of the program currently being processed, has to read data from the peripheral unit 30 and transfer them to the RAM 15, it first of all reads from the ROM 14 the instructions conceming how to activate the transfer. The CPU 12 then transmits the motor control logic unit 35, through system channel 16 and interfacing circuit 38, the commands to activate or maintain rotation of the magnetic disk 31 and to position the head 33 on a track of the magnetic disk 31 corresponding to the location of the data to be retrieved.
The CPU 12 also sends instructions to the DMA circuit 13 telling the latter to start reading and transferring a predetermined amount of data from the magnetic disk 31 to an area of the RAM 15, defined by the CPU 12.
The DMA circuit 13 then transmits, through the system channel 16 and the interfacing circuit 38, commands to the amplification and encoding circuit 36 to activate reading by head 33 of the data recorded on the magnetic disk 31.
The data read by the head 33 are amplified, instantaneously corrected and encoded in binary format by the amplification circuit 36 and transmitted to the FIFO memory 37 which transfers its contents in sequential manner to the RAM 15, through the interfacing circuit 38, the local channel 45 and the system channel 16, at the rate of 133 megabytes per second, since system channel 16 and local channel 45 have essentially the same characteristics.
Following transfer of the predetermined amount of data, the DMA circuit 13 transmits in a known way the end of transfer signal to the CPU 12.
As the data read and written in the RAM 15 in this way are not yet filtered of the control information, the amplification logic circuitry 36 in the peripheral unit 30 being suitable for digital coding of the analog signals coming from the head 33 but not for filtering them, the CPU 12, upon receiving the end of transfer signal from the DMA circuit 13, processes the data written in the RAM 15, removing the control information and putting the accordingly filtered data at the disposal of those processes requiring them.
The method of operation in recording data on the magnetic disk 31 is similar to, but the inverse of, that employed in reading described up to this point.
In point of fact, under the control of the CPU 12 and the DMA circuit 13, the data to be recorded on the disk 31 are first retrieved from the RAM 15 and then transferred in sequence to the FIFO 37 of the magnetic unit 30 and from here to the head 33 through the circuit 36.
It will thus be clear that in the computer described in this invention the transfer of data between the peripheral unit 30 and the processing unit 10 takes place at the maximum speed and with the maximum throughput possible, without the interfacing circuit 38 or the local channel 45 slowing down the flow of data.
It will also be evident that both the peripheral unit 30 and accordingly the electronic computer as a whole are more economical, without the microprocessor (and associated cache memory) for management of the data inside the peripheral unit 30 before they are transferred to the processing unit 10 (or before they are recorded on the disk 31).
It is obvious that changes may be made, or parts added, to the electronic computer described in the foregoing disclosure, without exiting from the scope of the present invention.

## Claims

1. An electronic computer comprising a central processing unit (12), a read only memory (14), direct memory access means (13), a random access system memory (15), and a hard disk unit (30) having a rotating magnetic disk (31), at least one write and/or read head (33) to be positioned on said magnetic disk (31) for writing and/or reading analog signals to/from said magnetic disk (31), activating means (35) for rotating said magnetic disk and positioning said head (33) with respect to said magnetic disk (31), analog-digital conversion means (36) for converting said analog signals into digital information, and a sequential access memory (37) connected to said analog-digital conversion means (36);
characterised in that
- said random access system memory (15) is connected to said sequential access memory (37) for storing said digital information converted from said analog-digital conversion means (36);
- said read only memory (14) stores all the programs for controlling said activating means (35) and the transfer of said digital information between said analog-digital conversion means (36) and said random access system memory (15); and
- said direct memory access means (13) transfers said digital information between said analog-digital conversion means (36) and said random access system memory (15) under the control of said central processing unit (12).

2. An electronic computer according to claim 1 wherein said digital information comprise both data information and control information, characterised in that said central processing unit (12) further comprise means for filtering and separating said data information from said control information.

3. An electronic computer according to claim 1, characterized in that said sequential access memory (37) is a low capacity access memory.

4. An electronic computer according to claim 1, characterized in that said sequential access memory (37) has the capacity of 1 Kbytes.

## Patentansprüche

1. Elektronischer Rechner mit einer CPU (12), einem ROM (14), einer DMA-Einrichtung (13), einem RAM (15), einer HDU (30) mit einer rotierenden Magnetplatte (31), wenigstens einem Schreib- u/o Lesekopf (33) zur Positionierung auf der Magnetplatte (31) zum Schreiben u/o Lesen analoger Signale auf die/von der Magnetplatte (31), einer Aktivierungseinrichtung (35) zum Drehen der Magnetplatte und zur Positionierung des Kopfes (33) bzgl. der Magnetplatte (31), einem A/D-Umsetzer (36) zum Umsetzen der Analogsignale in digitale Information, und einem SAM (37), der mit dem AD-Umsetzer (36) verbunden ist,
**dadurch gekennzeichnet, daß**
- der RAM (15) mit dem SAM (37) verbunden ist, um die vom A/D-Umsetzer (36) umgesetzte digitale Information zu speichern,
- der ROM (14) alle Programme zur Steuerung der Aktivierungseinrichtung (35) und der Übertragung der digitalen Information zwischen dem A/D-Umsetzer (36) und dem RAM (15) speichert, und
- die DMA-Einrichtung (13) die digitale Information zwischen dem A/D-Umsetzer (36) und dem RAM (15) unter der Steuerung der CPU (12) überträgt.

2. Elektronischer Rechner nach Anspruch 1, bei dem die digitale Information Daten- und Steuerinformation umfaßt,
**dadurch gekennzeichnet, daß**
die CPU (12) außerdem eine Einrichtung zum Filtern und Trennen der Dateninformation von der Steuerinformation aufweist.

3. Elektronischer Rechner nach Anspruch 1,
**dadurch gekennzeichnet, daß**
der SAM (37) ein Niederkapazitäts-Zugriffsspeicher ist.

4. Elektronischer Rechner nach Anspruch 1,
**dadurch gekennzeichnet, daß**
der SAM (37) eine Kapazität von 1 Kbyte hat.

## Revendications

1. Ordinateur électronique comprenant une unité centrale de traitement (12), une mémoire morte (14), un moyen (13) d'accès direct à la mémoire, une mémoire vive (15), et une unité de disque dur (30) ayant un disque magnétique rotatif (31), au moins une tête de lecture et/ou d'écriture (33) qui doit être positionnée sur ledit disque magnétique (31) pour écrire et/ou lire des signaux analogiques envoyés ou/provenant du dit disque magnétique (31), des moyens d'activation (35) pour faire tourner ledit disque magnétique et positionner ladite tête (33), par rapport audit disque magnétique (31), des moyens de conversion analogique-numérique (36) pour convertir lesdits signaux analogiques en informations numériques, et une mémoire à accès séquentiel (37) connectée auxdits moyens de conversion analogique-numérique (36) ; caractérisé en ce que :
- ladite mémoire vive (15) est connectée à ladite mémoire à accès séquentiel (37) pour stocker lesdites informations numériques converties par lesdits moyens de conversion analogique-numérique (36) ;
- ladite mémoire morte (14) stocke tous les programmes pour commander lesdits moyens d'activation (35) et le transfert desdites informations numériques entre lesdits moyens de conversion analogique-numérique (36) et ladite mémoire vive (15) ; et
- lesdits moyens d'accès direct à la mémoire (13) transfèrent lesdites informations numériques entre lesdits moyens de conversion analogique-numérique (36) et ladite mémoire vive (15) sur ordre de ladite unité centrale de traitement (12).

2. Ordinateur électronique selon la revendication 1, dans lequel lesdites informations numériques comprennent les informations de données et les informations de commande, caractérisé en ce que ladite unité centrale de traitement (12) comprend en outre des moyens de filtrage et de séparation desdites informations de données desdites informations de commande.

3. Ordinateur électronique selon la revendication 1, caractérisé en ce que ladite mémoire à accès séquentiel (37) est une mémoire à accès de faible capacité.

4. Ordinateur électronique selon la revendication 1, caractérisé en ce que ladite mémoire à accès séquentiel (37) a une capacité de 1 Kilo-octets.
